# EUROPEAN PATENT APPLICATION

(11) **EP 4 520 592 A1**
(43) Date of publication of application: **12.03.2025**
(21) Application number: 24197301.5
(22) Date of filing: 29.08.2024
(51) Int. Cl.: B60Q 1/04, B60R 19/50, B62D 65/16

(54) **VEHICLE FRONT END MOUNTING AND ALIGNMENT SYSTEM**

(30) Priority: 07.09.2023 GB 202313677
(71) Applicant: Nissan Motor Manufacturing (UK) Limited, Cranfield, Bedfordshire MK43 0DB (GB)
(72) Inventor: COALEY, James, Cranfield MK43 0DB - Bedfordshire (GB)

(57) **Abstract**

A headlamp (10, Fig. 1) and a bumper (11) are mounted relative to one another by providing a first bracket assembly (13, Fig. 3) located between the bumper and a headlamp lower central portion to mount the bumper thereto, and a second bracket assembly 14 located between the bumper and a headlamp lower lateral portion to mount a bumper lateral portion thereto. At least one bracket assembly comprises fixed male 15 and female 16 portions, the male portion being at least partially received in the female portion during assembly to provide a fixed alignment reference in at least one direction. Each of the first and second bracket assemblies comprises at least one mechanism 23, 24 providing adjustment in at least one direction between the respective portions of the headlamp and the bumper. The headlamp may comprise a lower V-shaped lens projection.

## Description

### Technical Field of the Invention

The present invention relates generally to the field of vehicle front end components, and more particularly to a mounting and alignment system and method to mount a headlamp and a bumper relative to one another with increased accuracy and consistency.

### Background to the Invention

Prior art solutions to the issue of mounting vehicle front end components accurately relative to one another are available.

One such prior art solution is provided in European Patent Application No. EP2228265 which describes an apparatus for mounting a bumper fascia to a vehicle, the apparatus comprising: a first retainer disposed on one of the fascia or the vehicle; a second retainer disposed on the other of the fascia or the vehicle; a first tapered aperture associated with the second retainer; and a second tapered aperture associated with the first retainer, wherein the first retainer is arranged to co-operate with the first tapered aperture to locate the fascia in a predetermined position in a first and second direction relative to the vehicle; and wherein the second retainer is arranged to co-operate with the second tapered aperture to locate the fascia in a pre-determined position in a third direction relative to the vehicle.

This configuration provides for at least one degree of freedom between the fascia and the vehicle during the assembly of the fascia to the vehicle whilst guiding the fascia to a desired location relative to the vehicle once the assembly is complete. For example, a degree of movement in the lateral direction means that the fascia can be manoeuvred into position on the vehicle assembly line ready for securing to the vehicle and fastening to the fenders. This means that the bumper fascia does not need to be exactly aligned to the vehicle before the process of screw fastening or clipping to the fenders and body can begin. As long as the fasteners can be located in the body and fenders, then the fastening process can begin.

This solution provides a tapered system in which the bumper fascia does not need to be exactly aligned to the vehicle before the process of screw fastening or clipping to the fenders and body can begin.

This inherently means that the bumper fascia still then needs to be aligned to the other front end components; which is difficult to achieve quickly, simply and accurately. This difficulty is increased in more recent vehicles, as the front ends of more recent vehicles include arcuate shapes as well as more geometric shapes; but also often, a combination of arcuate shapes with geometric shapes. For example, headlight lenses may incorporate a V-shaped section at the bottom of the lens, which projects downwards into the bumper area. Any misalignment in such an area would be very unsightly.

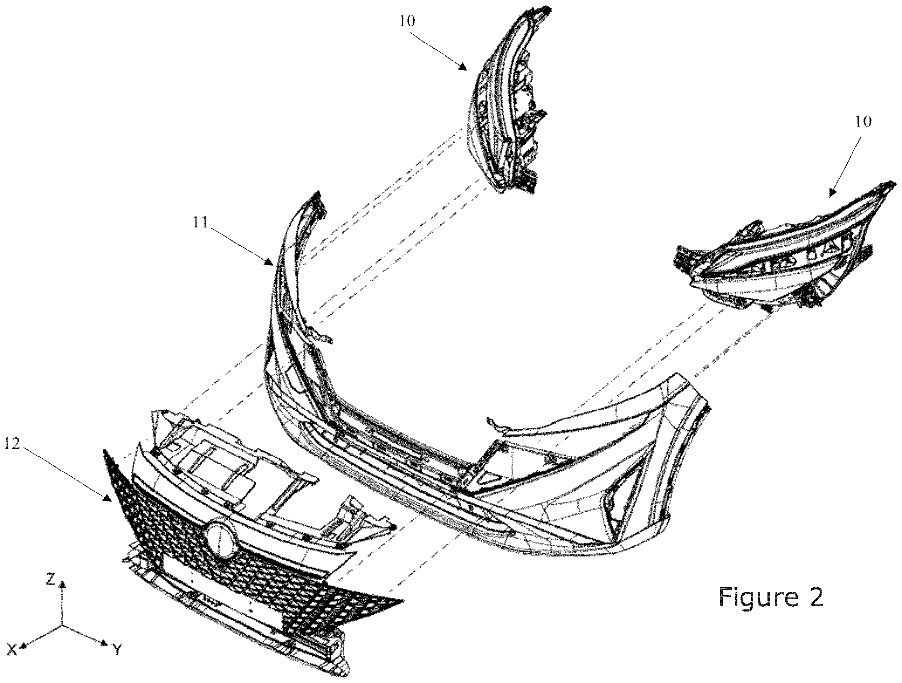

Throughout the following description and claims, the nomenclature longitudinal, transverse and vertical are used as indicated in Figure 2, and defined thus:
The transverse direction refers to the lateral axis (Y-axis) of the vehicle, perpendicular to the direction of travel of the vehicle and substantially parallel with the bumper beam. In this context, the term `inner' refers to a direction toward the midline of the vehicle and the term 'outer' refers to a direction away from the midline of the vehicle and towards the side of the vehicle.

The longitudinal direction refers to the fore-aft axis (X-axis) or to a direction substantially aligned to that axis and parallel with the direction of travel of the vehicle.

The vertical direction refers to the axis (Z-axis) lying substantially perpendicular to the transverse and longitudinal axes.

The terms forward and rearward are used in respect of the longitudinal axis and are aligned with a forward and rearward direction of travel of the vehicle.

It would therefore be an advance in the art to provide a mounting and alignment system and method to mount a headlamp and a bumper relative to one another with increased accuracy and consistency; which solves any one or more of the abovementioned problems.

### Summary of the Invention

According to one aspect of the invention, there is provided a mounting and alignment system to mount a headlamp and a bumper relative to one another, the system comprising:
a) A first bracket assembly located between the bumper and a lower central portion of the headlamp to mount a portion of the bumper thereto; and
b) A second bracket assembly located between the bumper and a lower lateral portion of the headlamp to mount a lateral portion of the bumper thereto; wherein

at least one of the first bracket assembly and the second bracket assembly comprise a fixed male portion and a corresponding fixed female portion into which the fixed male portion is at least partially received during assembly to provide a fixed alignment reference in at least one direction; and each of the first bracket assembly and the second bracket assembly comprise at least one adjustable mechanism configured to provide adjustment in at least one direction between the respective portions of the headlamp and the portions of the bumper;
and wherein one of the first and second bracket assemblies mounts a first portion of the bumper; and the other of the first and second bracket assemblies mounts a second portion of the bumper relative to the headlamp.

According to another aspect of the invention, there is provided a mounting and alignment system to mount a headlamp and at least one bumper relative to one another, the system comprising:
a) A first bracket assembly located between the bumper and a lower central portion of the headlamp to mount a portion of the bumper thereto and
b) A second bracket assembly located between the bumper and a lower lateral portion of the headlamp to mount a lateral portion of the bumper thereto,

the first bracket assembly comprising a fixed male portion and a corresponding fixed female portion to into which the fixed male portion is at least partially received during assembly to provide a fixed alignment reference in at least one direction, and at least one adjustable mechanism configured to provide adjustment in at least one direction between the lower central portion of the headlamp and the portion of the bumper; and
the second bracket assembly comprising a fixed male portion and a corresponding fixed female portion to into which the fixed male portion is at least partially received during assembly to provide a fixed alignment reference in at least one direction, and at least one adjustable mechanism configured to provide adjustment in at least one direction between lower lateral portion of the headlamp and the lateral portion of the bumper.

According to a still further aspect of the invention, there is provided a mounting and alignment system to mount a headlamp and at least one bumper relative to one another, the system comprising:
a) A first bracket assembly located between the bumper and a lower central portion of the headlamp to mount a portion of a bumper thereto; and
b) A second bracket assembly located between the bumper and a lower lateral portion of the headlamp to mount a lateral portion of a bumper thereto,
at least one of the first bracket assembly and the second bracket assembly comprising a fixed male portion and a corresponding fixed female portion to into which the fixed male portion is at least partially received during assembly to provide a fixed alignment reference in at least one direction and each of the first bracket assembly and the second bracket assembly comprising at least one adjustable mechanism configured to provide adjustment in at least one direction between the respective portions of the headlamp and the portions of the bumper.

Providing a mounting and alignment system to mount a headlamp and at least one bumper relative to one another, having a pair of bracket assemblies located on a lower central portion of the headlamp and a lower lateral portion of the headlamp, at least one of which includes a fixed alignment reference and both of which includes at least one adjustable mechanism allows mounting of the bumper relative to the headlamp using the fixed alignment reference to control a general alignment and then the at least one adjustable mechanism on each bracket assembly can be used to adjust or control the gap between the headlamp and the bumper on the respective trim edge to a finer degree.

The fixed male portion and a corresponding fixed female portion into which the fixed male portion is at least partially received during assembly to provide a fixed alignment reference (whether provided on the first bracket assembly and/or the second bracket assembly), may comprise a first bracket component disposed on the headlamp and comprising the fixed male portion and a second bracket component disposed on the bumper and comprising an aperture; wherein the fixed male portion is arranged to co-operate with (be at least partially received into) the aperture to locate the bumper in a pre-determined position in at least one direction relative to the headlamp, preferably minimising movement in the y-direction.

The mounting and alignment system is configured to mount the headlamp and the bumper of the vehicle relative to one another. The headlamp may preferably be arcuate in one or more of the three directions. For example, the headlamp may be curved from an inner forward portion to an outer rearward portion in a convex shape. The headlamp may be curved from a lower side to an upper side, again in a convex shape.

The headlamp may preferably include at least two main portions, namely a portion which will be externally visible when the headlamp is mounted relative to the bumper, and one or more other portions which are mounting portions used to mount the headlamp relative to the bumper; but which will be covered by the bumper when the headlamp is properly mounted thereto. One or more mounting portions may be provided. The mounting portions will preferably be provided about a periphery of the externally visible portion.

The externally visible portion will preferably include a light emitting portion which may be or include a light guide which mounts the light emitting devices of the headlamp, and preferably directs the light emitted by the light emitting devices in the required direction(s).

The externally visible portion of the headlamp may include one or more portions of shaping fascia. The shaping fascia of the headlamp will preferably be opaque portions. The shaping fascia may be provided to define an overall shape of the externally visible portion of the headlamp relative to which the bumper and other components of the front end are to be located, and preferably aligned.

As mentioned, the shaping fascia will preferably be shaped. The shaping fascia and/or the light emitting portion of the headlamp will normally be aligned with the bumper and/or other component(s) of the front end of the vehicle to close the forward side of the vehicle.

The headlamp may therefore include a number of different outer edges of the externally visible portion with which the bumper or other components are to be aligned. The outer edges may include a lower front side edge which may be aligned with a portion of the bumper or another part of the front-end such as a grille or similar, an outer lateral edge which may be aligned with a lateral, rearwardly extending part of the bumper and an inner lateral edge which may be aligned with an upper portion of the bumper or a portion of the front grille or similar.

The externally visible portion of the headlamp, and more particularly the shaping fascia may be generally triangular. In a preferred embodiment, different edges of the headlamp may require alignment with different front-end components and/or parts of the same front-end component which extend in different directions.

The externally visible portion of the headlamp will preferably include defined edges (provided to the externally visible portion) with which the other components or parts of components are to be aligned.

Preferably, the alignment of the headlamp with the other components or parts of components is required in terms of separation distance or gap between the adjacent edges of the respective components. The alignment may preferably be required to render the adjacent edges of the respective components flush with one another. In a preferred form, the alignment occurs in relation to both the separation distance or gap, and the flush mounting of the headlamp relative to the other components or parts of components.

As mentioned above, the front-end components of the vehicle may preferably include the headlamp and at least the bumper; and usually at least one other component such as a grille for example. Even in electric vehicles which do not require a conventional open grille to allow airflow to cool an engine, a front end component is often provided to simulate the visual appearance of a grille.

The bumper or other component is preferably provided to cover any shock absorbing components to absorb front-end impact; to improve vehicle aerodynamics; to provide ventilation e.g. for brakes; and to provide an attractive appearance. Usually, the front end appearance of the vehicle is defined by the headlamps, one on either side of the front end; the bumper provided at a lower forward portion of the vehicle and extending at least partially rearwardly on each side of the vehicle; and a central grille provided above the bumper and below the hood, and between the pair of headlamps.

Each headlamp may preferably be mounted to more than one front-end component. Each headlamp may be mounted to at least one portion of the bumper and/or to the grille. The headlamp may preferably be mounted to different components or different parts of the same component aligned with different edges of the externally visible portion of the headlamp.

The bumper or other component may have any shape. Preferably, the bumper or other component will have defined, shaped edges in locations which are adjacent to one or more edges of the externally visible portion of the headlamp. The edges of the bumper or other component which are located adjacent to the respective edges of the externally visible portion of the headlamp preferably correspond in shape. The respective edges are designed to correspond with each other closely. The first bracket assembly and second bracket assembly of the invention are provided to locate the respective edges and allow alignment thereof.

As mentioned above, a headlamp of the vehicle may be aligned with one or more portions of the bumper. For example, a lower edge of the externally visible portion of the headlamp may be aligned with an upper edge of the bumper. A lateral inner edge of the externally visible portion of the headlamp may be aligned with a portion of the grille. A lateral outer edge of the externally visible portion of the headlamp may be aligned with an outer edge of the bumper.

A grille provided as a front-end component may be aligned with an edge of the headlamp provided at an outer edge of the grille, which may be an upper or a lower edge.

In one embodiment, the first bracket assembly may be provided relative to a lower, more central edge of the externally visible portion of the headlamp. This lower, more central edge may be referred to as the "long edge".

The first bracket assembly may preferably be formed from at least two bracket components. A first bracket component may be provided relative to a rear side of the bumper or other component. The first bracket component may be attached to the rear side of the bumper or other component.

A second bracket component may be provided relative to a forward side of a mounting portion of the headlamp. Preferably, the second bracket component will be provided adjacent to the long edge of the headlamp. In this position, the second bracket component will preferably be covered by the bumper or other component when the headlamp is attached relative to the bumper or other component.

The fixed male portion may be provided on one of the first bracket component or second bracket component, and the corresponding fixed female portion into which the fixed male portion is at least partially received during assembly, is preferably provided on the other of the first bracket component or second bracket component. In one form, the fixed male portion may be provided on the second bracket component on the headlamp and the fixed female portion may be provided on the first bracket component on the bumper or other component.

The fixed male portion may be shaped to correspond to at least a part of the fixed female portion. In a preferred form, the fixed male portion may take the form of a pin or an extension or projection which extends forwardly, preferably generally horizontally. In a preferred form, the fixed female portion may take the form of a receiving aperture. The fixed male portion may be generally planar but may have one or more alignment or guide portions provided thereon in order to assist with alignment with the preferred receiving aperture.

The receiving aperture will preferably be shaped. In one form, the receiving aperture may have an upper portion which is larger in dimension than a smaller, lower portion. The smaller, lower portion may substantially correspond in internal dimension to the external dimension of the fixed male portion. This configuration may allow insertion of the male portion into the larger, upper portion of the receiving aperture, requiring a less precise alignment during initial insertion and then the fixed male portion, and the front end component relative to which it is attached can then be moved to locate the fixed male portion in the smaller, lower portion of the receiving aperture to align the front-end component more precisely. Providing this configuration also results in the front-end component resisting any lateral movement (in the Y direction) when the fixed male portion is inserted fully into the fixed female portion due to the similarity in dimension of the male portion and the smaller, lower portion of the aperture.

The first bracket assembly preferably also includes at least one adjustable mechanism configured to provide adjustment in at least one direction between the respective portions of the headlamp and portions of the bumper or other front-end component. Preferably, each adjustable mechanism will include more than one part or portion.

One of the parts or portions of each adjustable mechanism is preferably provided on the first bracket component and one of the parts or portions of each other adjustable mechanism is provided on the second bracket component, with the respective parts or portions provided to engage with one another in order to allow adjustment of the positions between the respective parts or portions, and thereby to allow adjustment of the position between the first bracket component and the second bracket component which leads to adjustment of the position between the headlamp and the bumper or other front-end component.

In one form, one of the parts or portions of each adjustable mechanism is a threaded mechanism. The threaded mechanism may be provided in association with the second bracket component. Preferably, the threaded mechanism includes at least one threaded member with an enlarged head. Preferably, the enlarged head will be provided with a tool engagement portion to allow a tool to engage the threaded member and rotate the threaded member. The head of the or each threaded member may be associated with an angled surface provided on or in association with the other part or portion of the adjustable assembly. Where more than one threaded member is provided, each threaded member may be provided in association with a surface which is angled in a different direction. In this configuration, rotation of the threaded member will preferably force the enlarged head against the angled surface to provide adjustment in a particular direction.

A spacer may be provided about the threaded member. The angled surface may be sandwiched between the enlarged head and the spacer.

The other of the parts or portions of each adjustable mechanism may be an opening to engage with a part of the threaded member. The opening may be provided through the angled surface. The opening may be a slot opening allowing the enlarged head to move along the length of the slot opening in each direction as the threaded member is tightened or loosened to provide the adjustment. The length of the slot may be aligned with the angle of the angled surface.

The opening may be internally threaded. The internally threaded opening may be an internally threaded bore. The internally threaded bore may be provided at an angle. In this configuration, rotation of the threaded member within the internally threaded bore may adjust the alignment in terms of flush fit.

As mentioned above, more than one adjustable mechanism may be provided to provide adjustability in different directions, and/or in different axes. Preferably, at least one adjustment mechanism is provided to adjust the relative positions in the Z-direction. This may allow adjustment of the separation distance or gap between the headlamp and the bumper or other component. At least one adjustment mechanism may be provided to adjust the relative positions in the X-direction. This may allow adjustment of the flush fit.

The first bracket component of the first bracket will preferably also mount the bumper or other component. Any mounting method may be used. For example, one or more clips or male/female assemblies may be used. At least one post or projection may be provided on the first bracket component over or about which a corresponding opening or depression provided on the bumper or other component fits to hold the bumper or other component relative to the first bracket component, and the first bracket. Preferably, the at least one post or projection will locate the bumper or other component relative to the first bracket in at least the Y-direction.

One or more additional attachment assemblies may be provided to mount the first bracket component to the second bracket component. One or more additional attachment assemblies may be provided to fix the position of the first bracket component relative to the second bracket component in one or more directions. One or more additional attachment assemblies may be provided to allow clearance for relative movement between the first bracket component and the second bracket component in one or more directions.

An upper side of the first bracket component may be attached to the second bracket component using one or more snap fit assemblies which may fix the first bracket component to the second bracket component in one or more directions. The at least one threaded mechanism described above may be provided relative to a lower side of the first bracket assembly to allow pivotal movement of the lower part of the first bracket assembly relative to the snap fit assembly provided at an upper part of the first bracket assembly.

The second bracket assembly may have any one or more features of the first bracket assembly. The second bracket assembly is preferably mounted relative to a lateral ("short") edge of the headlamp and the bumper or other component located relative thereto. The second bracket assembly may be mounted relative to an inner lateral edge of the headlamp adjacent to the grille; or a central portion of the bumper; or relative to an outer lateral edge of the headlamp adjacent to an outer portion of the bumper; or to a return portion of the bumper.

Preferably, the second bracket assembly is offset from the first bracket assembly. The second bracket assembly is preferably positioned to mount a separate part of the bumper or outer component, or a second component relative to the headlamp. The provision of the second bracket assembly means that the second bracket assembly can be used to align the separate part of the bumper or outer component or the second component relative to the headlamp, independent of the first bracket assembly.

In use, the headlamp may be attached to different portions of the bumper with different portions of the bumper attached to the first bracket assembly and the second bracket assembly. Preferably, the bumper and another component such as the grille will be attached to either the first bracket assembly or the second bracket assembly.

The materials used for vehicle bumpers in particular may be flexible enough to allow the first bracket assembly and the second bracket assembly to adjust different parts of a single bumper without causing damage to the bumper.

More than one second bracket assembly may be provided in a mounting and alignment system. Preferably a single first bracket assembly may be provided; but more than one second bracket assembly may be provided. The second bracket assemblies may have the same configuration as one another; but be provided relative to different short edges of the headlamp and the corresponding bumper or other component. For example, a first bracket assembly may be provided relative to the long edge of the headlamp on a lower, forward side of the headlamp; and a second bracket assembly may be provided on an inner lateral edge of the headlamp. Another second bracket assembly may be provided on an outer lateral edge of the headlamp.

In use, the bumper or other component is preferably attached relative to the headlamp in a position which is fixed in the Y direction, and adjustable in the X direction and the Z direction to allow adjustment of any gap or angle between an edge of the headlamp and the bumper or other component and/or to allow adjustment of the flush fit between an edge of the headlamp and the bumper or other component.

### Detailed Description of the Invention

In order that the invention may be more clearly understood, one or more embodiments thereof will now be described, by way of example only, with reference to the accompanying drawings, of which:
- Figure 1: is an axonometric view of a vehicle front end assembly of an embodiment including a grille, a bumper, and a pair of headlamps;
- Figure 2: is an exploded view of the vehicle front end assembly shown in Figure 1;
- Figure 3: is an axonometric view of a headlamp assembly of an embodiment;
- Figure 4: is an exploded view of the headlamp assembly shown in Figure 3;
- Figure 5: is a front elevation view of the headlamp assembly shown in Figure 3;

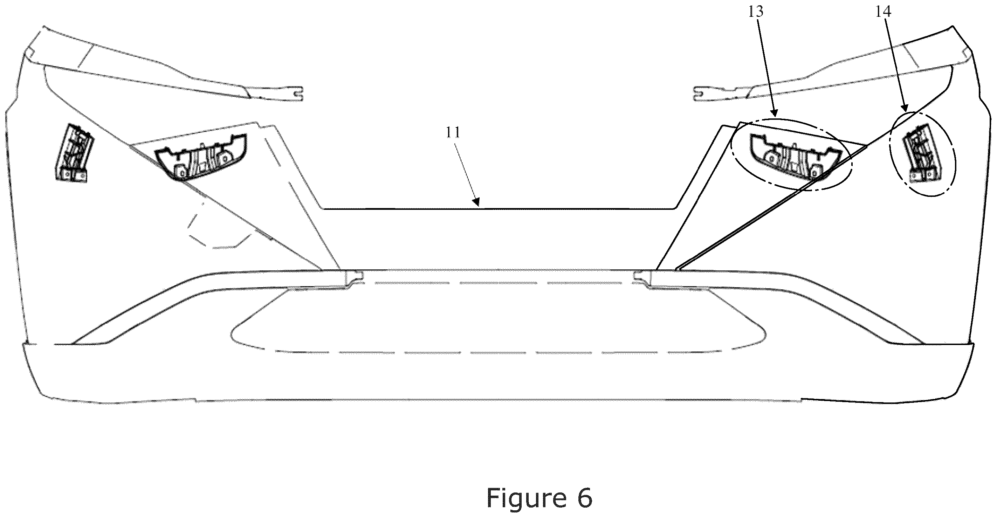

- Figure 6: is a front elevation view of a front end assembly showing the positions of the pairs of support bracket assemblies in an embodiment;

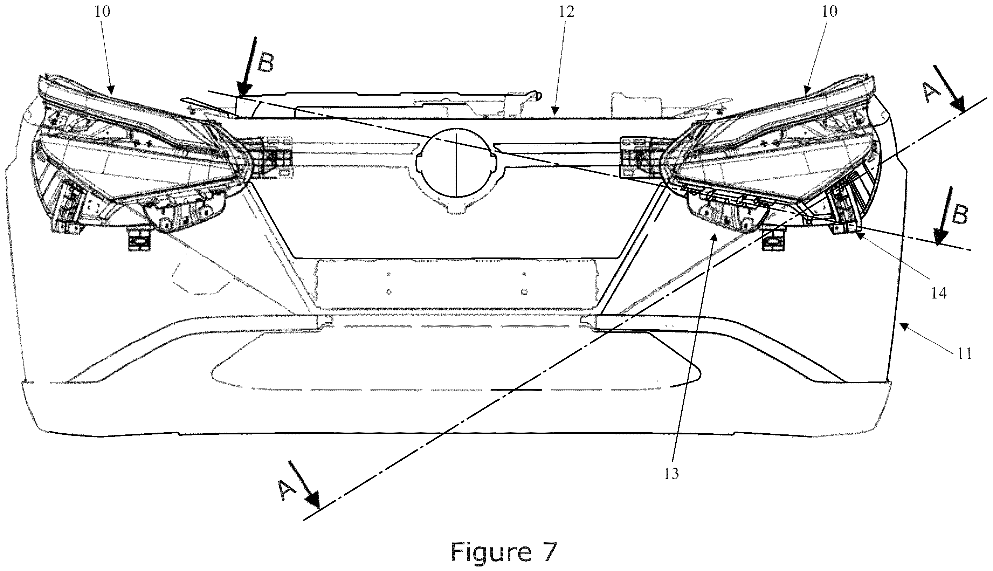

- Figure 7: is a front elevation view of a front end assembly showing the positions of the pair of headlamp assemblies in an embodiment;

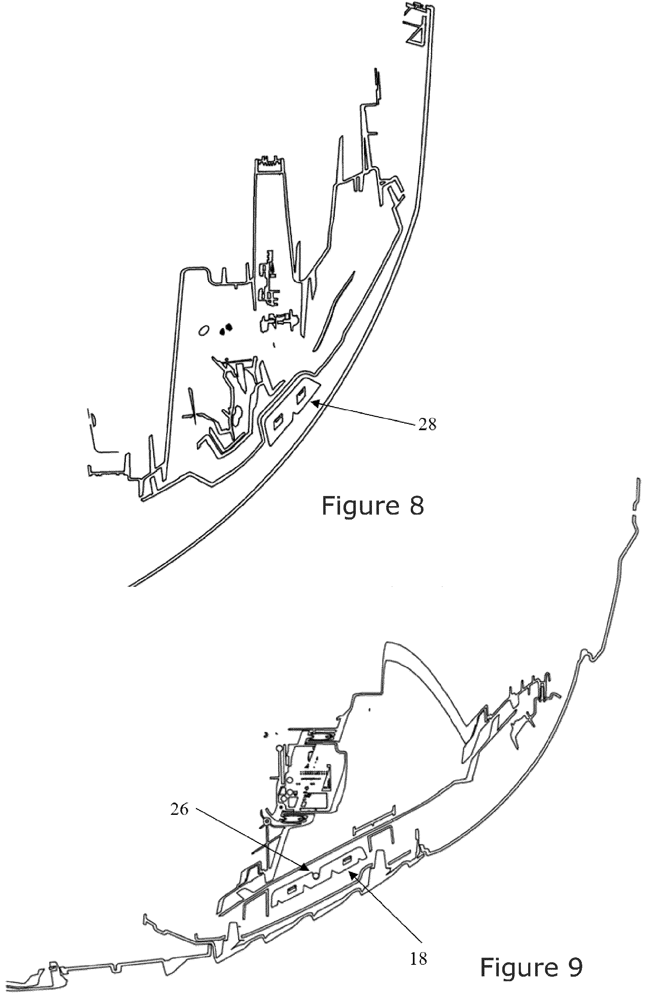

- Figure 8: is a sectional view through the headlamp assembly along line A-A as shown in Figure 7; and
- Figure 9: is a sectional view through the headlamp assembly along line B-B as shown in Figure 7.

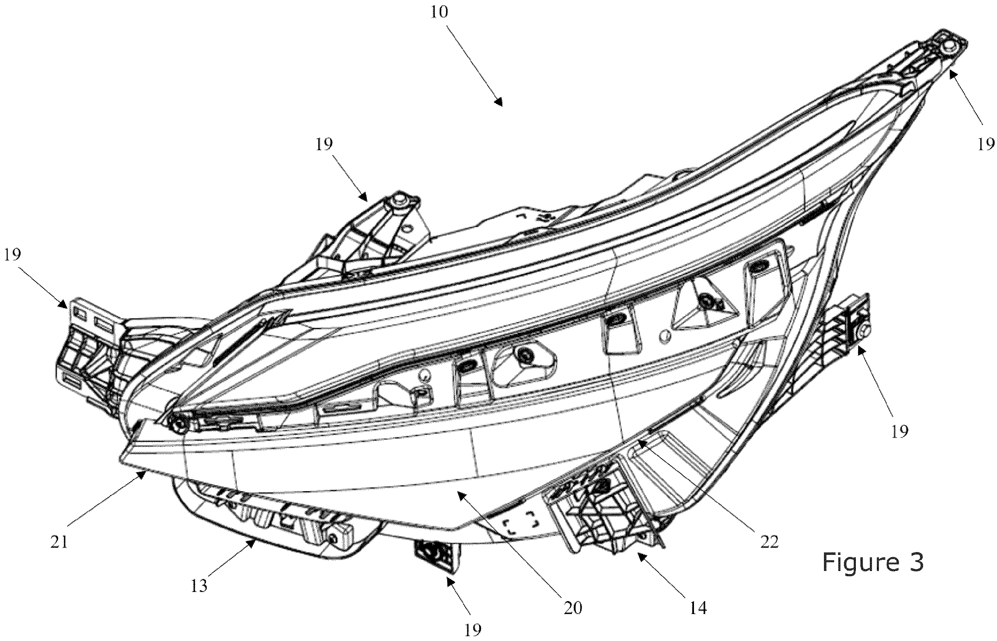

A mounting and alignment system to mount a headlamp 10 relative to a bumper 11 and a grille component 12 is illustrated in the accompanying Figures. The illustrated system comprises a first bracket assembly (13, Fig. 3) located between the grille 12 and a lower central portion of the headlamp 10 to mount the grille 12 thereto; and a second bracket assembly (14, Fig. 3) located between the bumper 11 and a lower lateral portion of the headlamp 10 to mount the bumper 11 thereto.

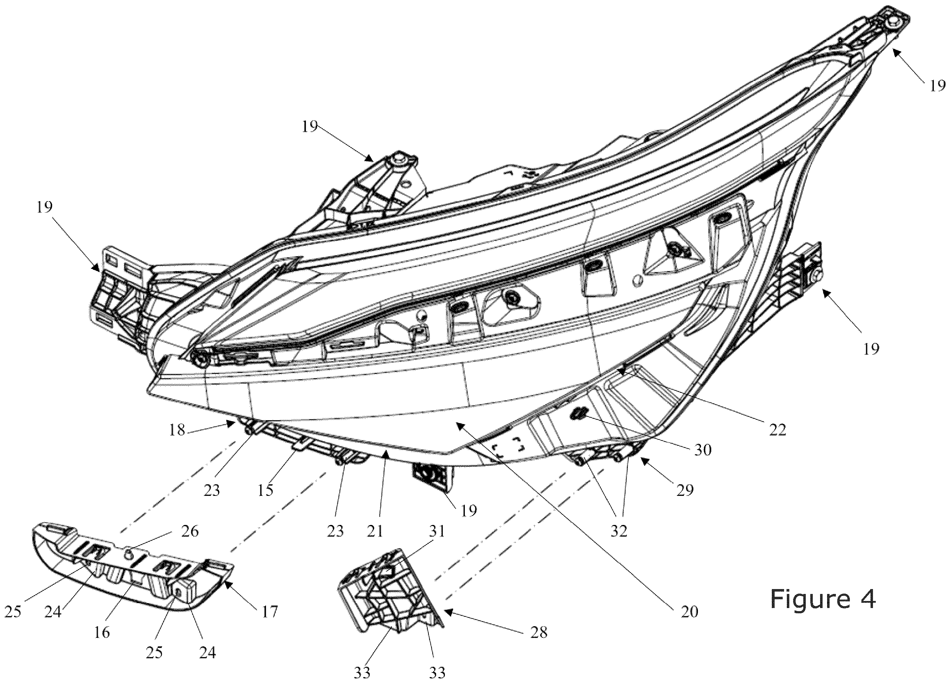

In the embodiment illustrated, the first bracket assembly 13 comprises a fixed male portion (15, Fig. 4) and a corresponding fixed female aperture (16, Fig. 4) into which the fixed male portion 15 is at least partially received during assembly to provide a fixed alignment reference in at least one direction, preferably the Y-direction. Each of the first bracket assembly 13 and the second bracket assembly 14 comprises a pair of adjustable mechanisms configured to provide adjustment in at least one direction between the respective portions of the headlamp 10 and the adjacent edge of the bumper 11 and grille 12.

As shown in Figure 4 in particular, the first bracket assembly 13 includes a first bracket component 18 disposed on the headlamp 10 which includes the fixed male portion 15 and a second bracket component 17 disposed on the grille 12 which includes the receiving aperture 16. In assembly, the fixed male portion 15 is arranged to co-operate with the aperture 16 to locate the grille 12 in a pre-determined position in a Y-direction relative to the headlamp 10.

As shown, the headlamp 10 is arcuate in one or more of the three (X, Y, Z) directions. For example, the headlamp 10 is curved from an inner forward portion to an outer rearward portion with a convex shape; and is also curved from a lower side to an upper side, again in a convex shape.

The headlamp 10 includes an externally visible portion which will be externally visible when the headlamp 10 is mounted relative to the bumper 11 and the grille 12, and mounting portions are used to mount the headlamp 10 relative to the bumper 11 and the grille 12. The mounting portions will be covered by the bumper 11 and the grille 12 when the headlamp 10 is properly mounted thereto.

There are different types of mounting portions illustrated in Figures 3 and 4. Some of the mounting portions 19 are provided to attach/mount the headlamp 10 relative to the chassis of the vehicle.

Other mounting portions are provided to position the first bracket assembly 13 between the grille 12 and a lower central portion of the headlamp 10 and to position the second bracket assembly 14 between the bumper 11 and a lower lateral portion of the headlamp 10 to mount the bumper 11 thereto.

The externally visible portion of the headlamp 10 includes a light emitting portion which may be or may include a light guide which mounts the light emitting devices, and preferably directs the light emitted by the light emitting devices in the required direction(s).

The externally visible portion of the headlamp 10 also includes a lower shaping fascia 20. The shaping fascia 20 of the headlamp 10 is an opaque portion to locate between the light emitting portion of the headlamp 10, and the bumper 11 and grille 12. The shaping fascia 20 is provided to provide an overall shape to the externally visible portion of the headlamp 10 with which the bumper 11 and grille 12 of the front end are located and aligned.

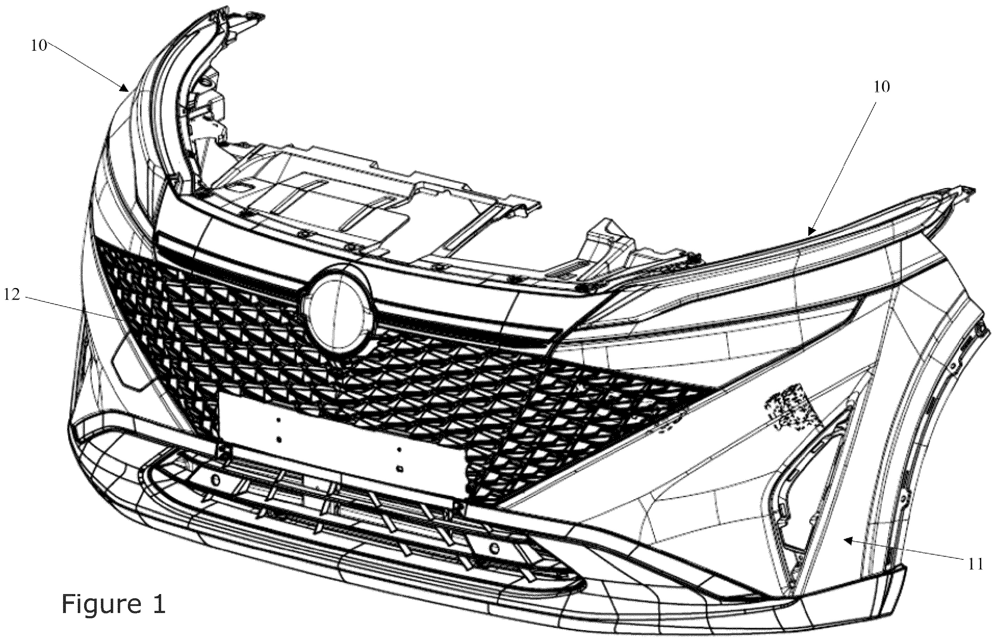

The shaping fascia 20 and the light emitting portion of the headlamp 10 are aligned with the bumper 11 and grille 12 of the front end of the vehicle, to close the forward side of the vehicle, as shown in Figure 1.

The headlamp 10 includes a number of different outer edges of the externally visible portion with which the bumper 11 and grille 12 are to be aligned. The outer edges of the headlamp illustrated in Figures 3 and 4 include a lower front side edge 21 which is aligned with an adjacent edge of the grille 12 and an outer lateral edge 22 which is aligned with a lateral, rearwardly extending part of the bumper 11.

There are one or more portions of the headlamp, and more particularly the shaping fascia 20 may be generally triangular or V-shaped as shown in Figures 3 and 4 with the lower front side edge 21 to be aligned with an adjacent edge of the grille 12 and an outer lateral edge 22 aligned with a lateral, rearwardly extending part of the bumper 11, where edges 21 and 22 extend in different directions.

Preferably, the alignment of the headlamp 10 with the bumper 11 and grille 12 is required both in terms of separation distance or gap between the adjacent edges of the respective components; and also to render the adjacent edges of the respective components flush with one another.

In the illustrated embodiment, the first bracket assembly 13 is provided relative to a lower, more central edge 21 of the externally visible portion of the headlamp 10 which may be referred to as the "long edge".

The first bracket assembly 13 of the illustrated embodiment is formed from two bracket components which are attachable relative to one another. A first bracket component 17 is provided relative to a rear side of the grille 12. A second bracket component 18 is provided relative to a forward side of a mounting portion of the headlamp 10, as shown in Figure 4.

The second bracket component 18 is shown adjacent to the long edge of the headlamp 10. In this position, the second bracket component 18 is covered by the grille 12 when the headlamp 10 is attached relative to the grille 12 as shown in Figure 1.

The fixed male portion 15 is provided on the second bracket component 18 and the corresponding fixed female aperture 16 into which the fixed male portion 15 is at least partially received during assembly, is provided on the first bracket component 17.

The fixed male portion 15 is shaped to correspond to at least a part of the fixed female aperture 16. As best shown in Figure 4, the fixed male portion 15 may take the form of an extension which extends forwardly, preferably generally horizontally from the second bracket component 18. As shown, the fixed male portion 15 is generally planar; but has one or more alignment or strengthening portions provided thereon.

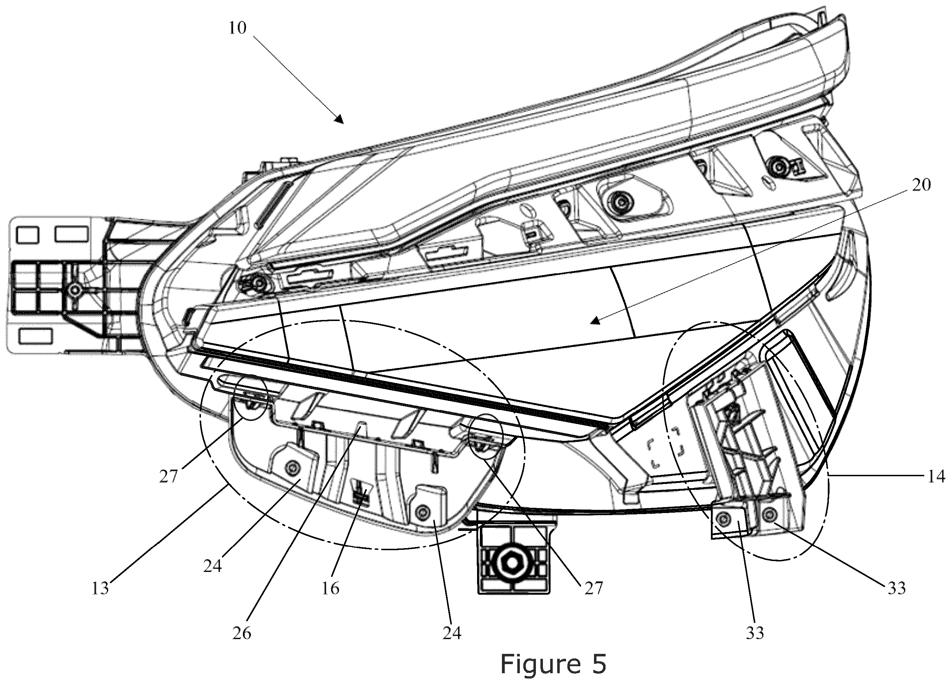

As best shown in Figure 5, the fixed female aperture 16 may then take the form of a shaped receiving aperture having an upper portion which is larger in dimension than a smaller, lower portion. The smaller, lower portion may substantially correspond in internal dimension, to the external dimension of the fixed male portion 15. This configuration allows insertion of the male portion 15 into the larger, upper portion of the receiving aperture 16, requiring a less precise alignment during initial insertion and assembly. Then the fixed male portion 15, and the front end component relative to which it is attached, can then be moved to locate the fixed male portion 15 in the smaller, lower portion of the receiving aperture 16 to align the front-end component more precisely. Providing this configuration also results in the front-end component resisting any lateral movement (in the Y direction) when the fixed male portion 15 is inserted fully into the fixed female portion 16.

The first bracket assembly 13 of the illustrated embodiment also includes a pair of adjustable mechanisms configured to provide adjustment in at least one direction between the respective portions of the headlamp 10 and grille 12. One of the parts or portions of each at least one adjustable mechanism is preferably provided on the first bracket component and one of the parts or portions of each at least one adjustable mechanism is provided on the second bracket component with the respective parts or portions provided to engage with one another in order to allow adjustment of the positions between the respective parts or portions, and thereby allow adjustment of the position between the first bracket component and second bracket component which leads to adjustment of the position between the headlamp and the bumper or other front-end component.

In the illustrated form, a pair of spaced apart threaded members 23 are provided extending from the second bracket component 18. The threaded members are elongate and include an enlarged head. As shown, the enlarged head is provided with a tool engagement portion to allow a tool to engage the threaded member and rotate the threaded member. The head of each threaded member is associated with an angled surface 24 provided on or in association with the first bracket component 17. Where more than one threaded member is provided as shown, each threaded member may be provided in association with a surface which is angled in a different direction. In this configuration, rotation of the threaded member will preferably force the enlarged head against the angled surface 24 to provide adjustment in a particular direction.

An internally threaded opening 25 is provided on the first bracket component 16 to engage with a part of the threaded member. The internally threaded opening 25 may be an internally threaded bore. The internally threaded bore may be provided at an angle. In this configuration, rotation of the threaded member within the internally threaded bore may adjust the alignment in terms of flush fit.

Preferably, at least one adjustment mechanism is provided to adjust the relative positions of the grille and headlamp in the Z-direction. This may allow adjustment of the separation distance or gap between the headlamp 10 and the grille 12. At least one adjustment mechanism may be provided to adjust the relative positions of the grille and headlamp in the X-direction. This may allow adjustment of the flush fit.

The first bracket component 17 of the first bracket assembly 13 mounts the bumper or other component. Any mounting method may be used. For example, one or more clips or male/female assemblies may be used. In the illustrated embodiment, a post or projection 26 is provided on the first bracket component 17 over or about which a corresponding opening or depression provided on the bumper or other component fits, to hold the bumper or other component relative to the first bracket component 17, and the first bracket 13. Preferably, the post or projection 26 locates the bumper or other component relative to the first bracket in at least the Y-direction; and minimises or prevents any movement of the bumper/other component laterally.

As shown in Figure 5, an upper side of the first bracket component 17 may be attached to the second bracket component 18 using one or more snap fit assemblies 27 to fix the first bracket component 17 to the second bracket component 18 in one or more directions. The threaded mechanisms described above may be provided relative to a lower side of the first bracket assembly 13 to allow pivotal movement of the lower part of the first bracket assembly 13 relative to the snap fit assemblies 27 provided at an upper part of the first bracket assembly 13.

As shown, the second bracket assembly 14 is mounted relative to a lateral ("short") edge of the headlamp 10; and the bumper 11 is located relative thereto. The second bracket assembly illustrated is mounted relative to an outer lateral edge of the headlamp 10, adjacent to an outer or side portion of the bumper 11.

As shown, the second bracket assembly 14 is offset from the first bracket assembly 13. The second bracket assembly 14 is preferably positioned to mount the bumper 11 to the headlamp independently from the grille 12, which is mounted via the first bracket assembly 13. The provision of the second bracket assembly 14 means that the second bracket assembly 14 can be used to align the bumper 11 independently of the grille mounted to the first bracket assembly; but both the bumper 11 and the grille 12 can be adjusted relative to the headlamp 10.

The materials used for vehicle bumpers in particular may be flexible enough to allow the first bracket assembly and second bracket assembly to adjust different parts of a single bumper without causing damage to the bumper.

The second bracket assembly 14 of the illustrated embodiment is also formed from two bracket components which are attachable relative to one another. A first bracket component 28 is provided relative to a rear side of the bumper 11. A second bracket component 29 is provided relative to a forward side of a mounting portion of the headlamp 10, as shown in Figure 4.

The second bracket component 29 is shown adjacent to the short edge of the headlamp 10. In this position, the second bracket component 29 is covered by the bumper 11 when the headlamp 10 is attached relative to the bumper 11 as shown in Figure 1.

A fixed male portion 30 is provided on the second bracket component 29 and the corresponding fixed female aperture 31 into which the fixed male portion 30 is at least partially received during assembly, is provided on the first bracket component 28.

The fixed male portion 30 illustrated is a snap fit assembly designed to engage with a periphery of the aperture 31.

As best shown in Figure 4, fixed male portion 30 is separated from the remainder of the second bracket component 29. This configuration results in the front-end component resisting any lateral movement (in the Y direction) when the fixed male portion 30 is inserted fully into the aperture 31.

The second bracket assembly 14 of the illustrated embodiment also includes a pair of adjustable mechanisms configured to provide adjustment in at least one direction between the respective portions of the headlamp 10 and bumper 11. One of the parts or portions of each adjustable mechanism is preferably provided on the first bracket component 28, with the other part or portion of each at least one adjustable mechanism being provided on the second bracket component 29. The respective parts or portions are provided to engage with one another in order to allow adjustment of the positions between the respective parts or portions, and thereby to allow adjustment of the position between the first bracket component 28 and the second bracket component 29; which leads to adjustment of the position between the headlamp 10 and the bumper 11.

In the illustrated form as shown in Figure 4, a pair of spaced apart threaded members 32 are provided extending from the second bracket component 29. Threaded members 32 are elongate, and include enlarged heads. As shown, each enlarged head is provided with a tool engagement portion, allowing a tool to engage with and to rotate the threaded member 32. The head of each threaded member 32 is associated with an angled surface 33 provided on or in association with the first bracket component 28. Each threaded member 32 may be provided in association with a surface 33 which is angled in a different direction. In this configuration, rotation of the threaded member 32 will preferably force the enlarged head against the angled surface 33 to provide adjustment in a particular direction.

An internally threaded opening (obscured in Figure 4) is provided on the first bracket component 28 to engage with a part of the threaded member 32. The internally threaded opening may be an internally threaded bore. The internally threaded bore may be provided at an angle. In this configuration, rotation of the threaded member 32 within the internally threaded bore may adjust the alignment in terms of flush fit.

An adjustment mechanism is provided to adjust the relative positions of the bumper 11 and headlamp 10 in the Z-direction. This may allow adjustment of the separation distance or gap between headlamp 10 and bumper 11. An adjustment mechanism may be provided to adjust the relative positions of bumper 11 and headlamp 10 in the X-direction. This may allow adjustment of the flush fit.

In use, bumper 11 and grille 12 are each attached relative to the headlamp in a position which is fixed in the Y direction, and adjustable in the X and Z directions to allow adjustment of any gap or angle between an edge of the headlamp and the bumper or other component and/or to allow adjustment of the flush fit between an edge of the headlamp and the bumper or other component.

The one or more embodiments are described above by way of example only. Many variations are possible without departing from the scope of protection afforded by the appended claims.

## Claims

1. A mounting and alignment system to mount a headlamp (10) and a bumper (11) relative to one another, the system comprising:
a. a first bracket assembly (13) located between the bumper and a lower central portion (21) of the headlamp (10) to mount a portion of the bumper (11) thereto; and
b. a second bracket assembly (14) located between the bumper and a lower lateral portion (22) of the headlamp (10) to mount a lateral portion of the bumper (11) thereto, wherein:
at least one of the first bracket assembly (13) and the second bracket assembly (14) comprise a fixed male portion (15) and a corresponding fixed female portion (16) into which the fixed male portion is at least partially received during assembly to provide a fixed alignment reference in at least one direction;
and each of the first bracket assembly (13) and the second bracket assembly (14) comprise at least one adjustable mechanism configured to provide adjustment in at least one direction between the respective portions of the headlamp (10) and corresponding portions of the bumper (11);
and wherein one of the first bracket assembly (13) and the second bracket assembly (14) mounts a first portion of the bumper; and the other of the first bracket assembly and the second bracket assembly mounts a second portion of the bumper relative to the headlamp.

2. A mounting and alignment system as claimed in claim 1, wherein the first bracket assembly (13) is provided relative to a lower, central V-shaped portion of the headlamp (10) in use.

3. A mounting and alignment system as claimed in claim 1 or claim 2, wherein the first bracket assembly (13) and/or the second bracket assembly (14) comprise a first bracket component (17) disposed on the headlamp (10) and comprising the fixed male portion (15) and a second bracket component (18) disposed on the bumper (11) and comprising an aperture (16) wherein the fixed male portion (15) is arranged to be at least partially received into the aperture to locate the bumper (11) in a pre-determined position in at least a first direction relative to the headlamp (10).

4. A mounting and alignment system as claimed in claim 3, wherein the first bracket component (17) is provided relative to a rear side of the bumper (11), and the second bracket component (18) is provided relative to a forward side of a mounting portion of the headlamp (10).

5. A mounting and alignment system as claimed in claim 3 or claim 4, wherein the receiving aperture (16) is shaped having an upper portion which is larger in dimension than a smaller, lower portion.

6. A mounting and alignment system as claimed in claim 5, wherein the smaller, lower portion substantially corresponds in internal dimension to an external dimension of the fixed male portion (15).

7. A mounting and alignment system as claimed in any one of claims 3 to 6, wherein at least one adjustable mechanism is provided on the second bracket component (18) and comprises at least one threaded member (23) with an enlarged head.

8. A mounting and alignment system as claimed in claim 7, wherein the enlarged head of the or each threaded member (23) is associated with an angled surface (24) provided on or in association with the first bracket component (17).

9. A mounting and alignment system as claimed in claim 8, wherein more than one threaded member (23) is provided, each threaded member being provided in association with a surface (24) which is angled in a different direction.

10. A mounting and alignment system as claimed in either claim 8 or claim 9, further comprising a spacer provided about the threaded member (23), the angled surface (24) being sandwiched between the enlarged head and the spacer.

11. A mounting and alignment system as claimed in any one of claims 7 to 10, wherein an opening to engage with a part of the threaded member (23) is provided in the or each angled surface (24).

12. A mounting and alignment system as claimed in claim 11, wherein the opening is a slot opening with a length of the slot aligned with an angle of the angled surface (24).

13. A mounting and alignment system as claimed in any one of claims 3 to 12, wherein the first bracket component (17) of the first bracket assembly (13) further comprises at least one post or projection (26) over which a corresponding opening provided on the bumper fits to hold the bumper (11) relative to the first bracket component (17), and hence to the first bracket.

14. A mounting and alignment system as claimed in claim 13, wherein an upper side of the first bracket component (17) is attached to the second bracket component (18) using one or more snap fit assemblies (27).

15. A mounting and alignment system as claimed in claim 14, wherein the at least one threaded mechanism is provided relative to a lower side of the first bracket assembly (13) to allow pivotal movement of the lower side of the first bracket assembly relative to the snap fit assemblies (27) provided at the upper side of the first bracket assembly (13).

16. A mounting and alignment system as claimed in any one of the preceding claims, wherein the bumper (11) is attached relative to the headlamp (10) in a position which is fixed in a Y-direction, and adjustable in an X-direction and a Z-direction to allow adjustment of any gap or angle between an edge of the headlamp and the bumper and/or to allow adjustment of the flush fit between an edge of the headlamp (10) and the bumper (11).
